(19) Europäisches Patentamt
European Patent Office
Office européen des brevets

(11) EP 4 151 609 A1

(12) EUROPEAN PATENT APPLICATION

(43) Date of publication:
**22.03.2023 Bulletin 2023/12**

(21) Application number: **21196890.4**

(22) Date of filing: **15.09.2021**

(51) International Patent Classification (IPC):
***C04B 14/00*** *(2006.01)* ***C04B 26/14*** *(2006.01)*
***C04B 40/00*** *(2006.01)* ***C04B 40/06*** *(2006.01)*
***C09J 163/00*** *(2006.01)*

(52) Cooperative Patent Classification (CPC):
(C-Sets available)
**C08G 59/5013; C04B 26/14; C08G 59/621; C08K 3/22; C09J 163/00;** C04B 2111/00715

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
- **Martin-Lasanta, Ana-Maria**
**35398 Gießen (DE)**
- **Kumru, Memet-Emin**
**86199 Augsburg (DE)**
- **Behrens, Nicole**
**81245 München (DE)**

(74) Representative: **Hilti Aktiengesellschaft**
**Corporate Intellectual Property**
**Feldkircherstrasse 100**
**Postfach 333**
**9494 Schaan (LI)**

# (54) CAO IN EPOXY AMINE ADHESIVE BONDED ANCHORS

(57) The present invention relates to a multi-component epoxy resin material, comprising: an epoxy resin component (A) comprising at least one hardenable epoxy resin, and a hardener component (B) comprising a hardening agent for the epoxy resin of component (A), wherein the multi-component epoxy resin material further comprises CaO and at least one filler (F) selected from oxides of silicon and aluminium, or mixed oxides in the presence of further cations, wherein the combined amount of CaO and filler (F) in the multi-component epoxy resin material is 20 to 55 wt.-%, based on the total weight of the multi-component epoxy resin material, and wherein the weight ratio of CaO to filler (F) in the multi-component epoxy resin material is at least 0.1. The present invention further relates to the use of the multi-component epoxy resin material for fixing anchoring elements in a hole or crevice in a building substrate, as well as to a method of fixing an anchoring element in a hole or crevice in a building substrate, comprising introducing the multi-component epoxy resin material and an anchoring element into the hole or crevice, and allowing the multi-component epoxy resin material to cure.



Processed by Luminess, 75001 PARIS (FR)

(Cont. next page)

(52) Cooperative Patent Classification (CPC): (Cont.)

C-Sets
**C04B 26/14, C04B 14/06, C04B 14/303,
C04B 20/008, C04B 22/064, C04B 40/0666;
C08K 3/22, C08L 63/00**

## Description

The present invention relates to a multi-component epoxy resin material, comprising: an epoxy resin component (A) comprising at least one hardenable epoxy resin, and a hardener component (B) comprising a hardening agent for the epoxy resin of component (A), wherein the multi-component epoxy resin material further comprises CaO and at least one filler (F) selected from oxides of silicon and aluminium, or mixed oxides in the presence of further cations, wherein the combined amount of CaO and filler (F) in the multi-component epoxy resin material is 20 to 55 wt.-%, based on the total weight of the multi-component epoxy resin material, and wherein the weight ratio of CaO to filler (F) in the multi-component epoxy resin material is at least 0.1. The present invention further relates to the use of the multi-component epoxy resin material for fixing anchoring elements in a hole or crevice in a building substrate, as well as to a method of fixing an anchoring element in a hole or crevice in a building substrate, comprising introducing the multi-component epoxy resin material and an anchoring element into the hole or crevice, and allowing the multi-component epoxy resin material to cure.

## Background

In the construction industry, aggregates in the form of particulate fillers are known for use in polymer-forming chemical anchoring mortars (sometimes also referred to as "*chemical dowels*") with one or more components, for example in the form of two-chamber cartridges or two-chamber capsules, for fixing anchoring elements in boreholes. Often, not much importance is attached to the nature of the fillers, unless they are those which, like cement, themselves contribute to the consolidation, for example by hydraulic setting.

It is known that water affects the performance of chemical anchoring mortars, as for example described in Cook, R. A., Konz, R. C., "Factors Influencing Bond Strength of Adhesive Anchors", ACI Structural Journal, 2001, 98, 76- 86. It is known that the presence of water or even moisture during the installation of a chemical anchor can influence the performance of an adhesive anchor system either mechanically, chemically or even both. Jobsite conditions where the concrete substrate is wet, are common and sometimes unexpected.

In view of this, there is a need in the art for chemical mortars with a lower sensitivity to the presence of water, i.e. that do not weaken so strongly in damp-holes or even water-filled boreholes. That is to say, it is an object of the present invention to provide chemical mortars showing a minimum difference in bond strength between dry and wet conditions.

The possible use of CaO ("*Branntkalk*") as filler in chemical anchors is mentioned in the text in EP 2 248 781. However, in this publication, no disclosure on the amount of CaO or the ration of CaO to conventional filler can be found, and no effect related to the CaO per se is shown. Additionally, an unpublished European patent application No. 21188423.4 (filed 29.07.2021) showing the improved performance of epoxy amine chemical anchors containing CaO, under high temperature performance is pending.

## Summary of the invention

The above object underlying the present invention solved by a multi-component epoxy resin material, comprising:

an epoxy resin component (A) comprising at least one hardenable epoxy resin, and
a hardener component (B) comprising a hardening agent for the epoxy resin of component (A),

wherein the multi-component epoxy resin material further comprises CaO and at least one filler (F) selected from oxides of silicon and aluminium, or mixed oxides in the presence of further cations, wherein the combined amount of CaO and filler (F) in the multi-component epoxy resin material is 20 to 55 wt.-%, based on the total weight of the multi-component epoxy resin material, and

wherein the weight ratio of CaO to filler (F) in the multi-component epoxy resin material is at least 0.1.

The present invention also relates to the use of the multi-component epoxy resin material as defined above for fixing anchoring elements in a hole or crevice in a building substrate.

In another embodiment, the present invention relates to a method of fixing an anchoring element in a hole or crevice in a building substrate, comprising introducing the multi-component epoxy resin material as defined above and an anchoring element into the hole or crevice, and allowing the multi-component epoxy resin material to cure.

Further embodiments of the present invention are described in the following detailed description and the appended claims.

## Detailed Description of the Invention

As outlined above, the present invention provides a multi-component epoxy resin material, comprising:

an epoxy resin component (A) comprising at least one hardenable epoxy resin, and
a hardener component (B) comprising a hardening agent for the epoxy resin of component (A),

wherein the multi-component epoxy resin material further comprises CaO and at least one filler (F) selected from oxides of silicon and aluminium, or mixed oxides in the presence of further cations, wherein the combined amount of CaO and filler (F) in the multi-component epoxy resin material is 20 to 55 wt.-%, based on the total weight of the multi-component epoxy resin material, and
wherein the weight ratio of CaO to filler (F) in the multi-component epoxy resin material is at least 0.1.

It has been surprisingly found by the present inventors that the bond strength deceasing effect of water is significantly reduced when parts of the conventional filler present in the multi-component epoxy resin material are replaced by CaO. Thus, the multi-component epoxy resin material according to the present invention shows lower moisture sensitivity as regards the bonding strength obtained.

In view of this, there is a need in the art for chemical mortars with a lower sensitivity to the presence of water, i.e. that do not weaken so strongly in damp-holes or even water-filled boreholes. That is to say, it is an object of the present invention to provide chemical mortars showing a minimum difference in bond strength between dry and wet conditions.

In the context of the present invention, the terms used herein and in the following description have the following meanings:

- "*aliphatic compounds*" are acyclic or cyclic, saturated or unsaturated carbon compounds, excluding aromatic compounds,
- "*cycloaliphatic compounds*" or "alicyclic compounds" are compounds having a carbocyclic ring structure, excluding benzene derivatives or other aromatic systems,
- "*aromatic compounds*" are compounds that follow the Hückel (4n+2) rule, and
- "*amines*" are compounds derived from ammonia by replacement of one, two or three hydrogen atoms by hydrocarbon groups and having the general structures RNH2 (primary amines), $R_2NH$ (secondary amines) and $R_3N$ (tertiary amines) (see: IUPAC Compendium of Chemical Terminology, 2nd Ed. (the "Gold Book"), Compiled by A. D. McNaught and A. Wilkinson, Blackwell Scientific Publications, Oxford (1997)),
- "*Salts*" are compounds composed of positively charged ions (cations) and negatively charged ions (anions). Ionic bonds are present between these ions. For example, the expression "*salts of nitric acid*" describes compounds that are derived from nitric acid ($HNO_3$) and include a nitrate ($NO_3^-$) as an anion. The expression "*salts* of *trifluoromethanesulfonic acid*" describes compounds derived from trifluoromethanesulfonic acid ($CF_3SO_3H$) and comprise as an anion a triflate ($CF_3SO_3^-$). The term salt in the sense of the present invention also includes the corresponding hydrates of the salts. The salts(s) which are used as accelerators are also referred to as salts in the sense of the present invention,
- the terms "a" or "*an*" as articles preceding a chemical compound class mean that one or more compounds falling under that chemical compound class may be meant. In a preferred embodiment, these articles mean only a single compound,
- the term "*at least one*" means numerically "*one or more*". In a preferred embodiment, the term numerically means "*one*",
- the terms "*include*" and "comprising" mean that there may be other components in addition to those mentioned. These terms are meant inclusively and therefore include "*consisting of*".
- "*Consisting of*" is meant conclusively and means that no further constituents may be present.

In an embodiment, the terms "*comprise*" or "*comprising*" mean "*consisting of*", a range delimited by numbers, e.g. "*from 80°C to 120°C*" means that the two corner values and each value within that range are individually disclosed.

As stated above, the present invention relates in one embodiment to a multi-component epoxy resin material. "*Multi-component*" systems in the sense of the present invention contain several components stored separately from each other, so that curing of the ingredients contained in the components occurs only after all the components have been mixed together. In particular, the multi-component epoxy resin material according to the invention contains at least one component (A) comprising at least one hardenable epoxy resin, and at least one further component (B) comprising a hardening agent for the epoxy resin of component (A). In a preferred embodiment, the multi-component material according to the invention is a two-component system. Thus, in one embodiment, the present invention relates to a multi-component epoxy resin material as defined above in the form of a two-component system consisting of components (A) and (B).

Conventional Filler (F)

The multi-component epoxy resin material according to the present invention comprises filler (F) selected from oxides of silicon and aluminum, or mixed oxides in the presence of further cations. Oxides of silicon or aluminum are primarily silicon dioxide ($SiO_2$) or aluminum oxide ($Al_2O_3$). Mixed oxides, if present, are primarily oxides of silicon and aluminum in the additional presence of one or more oxides selected from oxides of the group of metals consisting particularly of calcium, titanium, iron, sodium or the like. In a preferred embodiment, the filler is selected from quartz, silicates, or alumina, in particular $\alpha$-alumina. Such fillers are commercially available. The filler may be comprised in component (A) and/or component (B), and preferably is comprised in both component (A) and component (B).

The filler (F) may optionally be functionalized. For example, the filler may be modified, i.e. surface modified, with a silane (S') containing at least one Si-bonded hydrolyzable group. Suitable silanes (S') for surface modification include but are not limited to, for example, 3-(meth)acryloyl-oxypropyltrialkoxysilane, 3-(meth)acryloyl-oxymethyltrialkoxysilane, 3-(meth)acryloyl-oxypropylmethyldialkoxysilane, 3-glycidyloxypropyltrialkoxysilane, glycidyloxymethyltrialkoxysilane, 3-glycidyloxypropylmethyldi-alkoxysilane, 2-(3,4-epoxycyclohexyl)ethyltrimethoxysilane, N-2-(aminoethyl)-3-aminopropylmethyl-diethoxysilane, N-2-(aminoethyl)-3-aminopropyl-triethoxysilane, 3-aminopropyl-trialkoxysilane, N-phenyl-3-aminoethyl-3-aminopropyl-trialkoxysilane, 2-aminoethyl-3-aminopropyl-trialkoxysilane, bis-(3-trialkoxysilylpropyl)amine, 3-mercaptopropyltrialkoxysilane, 3-mercaptopropylmethyldialkoxysilane, alkenylalkoxysilane, trialkoxysilylpropyldiethylenetetramine and/or tetraalkoxysilane, or a mixture of two or more thereof.

Preferred silanes (S') are those having reactive groups, such as epoxide groups or amino groups, and hydrolyzable groups bonded to Si, such as alkoxy (e.g. with 1 to 7 carbon atoms, such as methoxy or ethoxy) or halogeno, such as chloro. In a preferred embodiment, the silane (S) is selected from 3-glycidyloxypropyltrialkoxysilane, such as 3-glycidyloxypropyltrimethoxysilane (GLYMO) or -ethoxysilane, glycidyloxymethyltrialkoxysilane, such as glycidyloxymethyltrimethoxysilane or glycidyloxymethyltriethoxysilane, 3-glycidyloxypropylmethyldi-alkoxysilane, such as 3-glycidyloxypropylmethyldi-methoxysilane or 3-glycidyloxypropylmethyldi-ethoxysilane, 2-(3,4-epoxycyclohexyl)ethyltrimethoxysilane, N-2-(aminoethyl)-3-aminopropylmethyldiethoxysilane, N-2-(aminoethyl)-3-aminopropyl-triethoxysilane, 3-aminopropyl-trialkoxysilane, such as 3-aminopropyl-trimethoxysilane (AMMO) or 3-aminopropyl-triethoxysilane (AMEO), N-phenyl-3-aminoethyl-3-aminopropyl-trialkoxysilane, such as N-phenyl-3-aminoethyl-3-aminopropyl-trimethoxysilane, 2-aminoethyl-3-aminopropyl-trialkoxysilane, such as 2-aminoethyl-3-aminopropyl-trimethoxysilane (DAMO), bis-(3-trialkoxysilylpropyl)amine, such as bis-(3-trimethoxysilylpropyl)amine or bis-(3-triethoxysilylpropyl)amine, trialkoxysilylpropyldiethylenetetramine, such as trimethoxysilylpropyldiethylenetetramine (TRIAMO) or triethoxysilylpropyldiethylenetetramine, and/or tetraalkoxysilane, such as tetramethoxysilane, tetraethoxysilane or tetrapropoxysilane, or a mixture of two or more thereof. Particularly preferred silanes (S) are, for example, 3-aminopropyl-triethoxysilane or 3-glycidyloxypropyltrimethoxysilane, e.g. Dynasylan GLYMO from Evonik Industries, Germany.

The particle size of the filler (F) is not especially important according to the present invention. For example, the filler (F) may have a median particle size $d_{50}$ of 100 $\mu$m or less, or 50 $\mu$m or less, such as 20 $\mu$m or less.

CaO

As outlined above, the multi-component epoxy resin material according to the present invention further comprises CaO in addition to the conventional filler (F) such that the combined amount CaO and filler (F) in the multi-component epoxy resin material is 20 to 55 wt.-%, based on the total weight of the multi-component epoxy resin material, and the weight ratio of CaO to filler (F) in the multi-component epoxy resin material is at least 0.1.

In a preferred embodiment, the weight ratio of CaO to filler (F) in the multi-component epoxy resin material is at least 0.15, such as 0.2 to 3.0.

In another preferred embodiment, the combined amount of CaO and filler (F) in the multi-component epoxy resin material is 25 to 55 wt.-%, based on the total weight of the multi-component epoxy resin material. For example, the combined amount of CaO and filler (F) in the multi-component epoxy resin material may be 35 to 55 wt.-%, based on the total weight of the multi-component epoxy resin material.

Component (A)

Epoxy resin component (A) of the multi-component epoxy resin material according to the present invention typically comprises liquid and solid constituents. As a typically liquid component, at least one epoxy resin-based reactive synthetic resin ("*epoxy resin component (A)*") is usually included. According to the invention, "*epoxy resin*" is understood to mean a compound or the combination of two or more compounds containing a reactive epoxy group, also called oxirane group. Such an epoxy group is shown below:

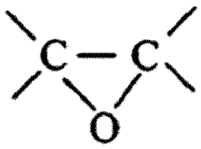

Suitable curable epoxy resins for use in component (A) of the present invention are a large number of commercially available compounds known to those skilled in the art, which contain on average more than one epoxide group, preferably two epoxide groups, per molecule. These epoxy resins can be both saturated and unsaturated and aliphatic, alicyclic, aromatic or heterocyclic and can also contain hydroxyl groups. They may further contain such substituents that do not cause interfering side reactions under the mixing or reaction conditions, for example, alkyl or aryl substituents, ether groups and the like. Within the scope of the invention, trimeric and tetrameric epoxides are also suitable.

Preferably, the epoxy resins are glycidyl ethers derived from polyhydric alcohols, particularly polyhydric phenols such as bisphenols and novolaks, especially those having an average glycidyl group functionality of 1.5 or greater, especially 2 or greater, for example from 2 to 10.

The epoxy resins may have an epoxy equivalent weight (EEW) of from 120 to 2000 g/EQ, preferably from 140 to 400. Mixtures of several epoxy resins can also be used.

Examples of polyhydric phenols used to prepare epoxy resins include resorcinol, hydroquinone, 2,2-bis(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane, and 4,4'-dihydroxy-3,3'-dimethyldiphenylpropane. Epoxy-based monomers/resins useful in the present invention include, without limiting the scope of the invention, diglycidyl ethers of bisphenol A and F, and aliphatic and cycloaliphatic epoxides. Other examples include hexanediol diglycidyl ethers, trimethylolpropane triglycidyl ethers, bisphenol A epichlorohydrin resins, and/or bisphenol F epichlorohydrin resins, for example, having an average molecular weight of $MW \leq 2000$ g/mol. Liquid diglycidyl ethers based on bisphenol A and/or F with an EEW of 150 to 300 g/EQ are preferred.

The EEW (epoxide equivalent weight) values are usually indicated on the starting materials by the manufacturers or they are determined or calculated according to known methods. They indicate the amount in g of resin containing 1 mole of epoxy groups: EEW = MW / functionality.

The proportion of epoxy resin in the epoxy resin component (A) is >0 to 70% by weight, preferably 10 to 65% by weight and particularly preferably 30 to 60% by weight, based on the total weight of the epoxy resin component (A).

According to the invention, reactive diluents, such as glycidyl ethers of aliphatic, alicyclic or aromatic mono- or in particular polyalcohols, which have a lower viscosity than epoxides containing aromatic groups, can be used as a further liquid component. Examples of reactive diluents are monoglycidyl ethers, e.g. o-cresyl glycidyl ethers, and glycidyl ethers with an epoxide functionality of at least 2, such as 1,4-butanediol diglycidyl ether (BDDGE), cyclohexanedimethanol diglycidyl ether and hexanediol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylol ethane triglycidyl ether (TMETGE), with trimethylol ethane triglycidyl ether being preferred. Mixtures of two or more of these reactive diluents can also be used, preferably mixtures containing triglycidyl ether, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

Overall, the reactive diluents are preferably present in an amount of >0 to 60% by weight, in particular of 1 to 20% by weight, based on the total weight of the epoxy resin component (A).

The proportion of epoxy resin component (A) in the total weight of the multicomponent epoxy resin system is preferably from 5 to 90% by weight, in particular from 20 to 80% by weight or from 30 to 70% by weight, such as from 40 to 70% by weight.

Suitable epoxy resins and reactive thinners can also be found in the standard work by Michael Dornbusch, Ulrich Christ and Rob Rasing, "Epoxy Resins," Vincentz Network GmbH & Co KG (2015), ISBN 13: 9783866308770. These compounds are incorporated herein by reference.

Usual solid constituents include in particular fillers and CaO, as outlined above, or thixotropic agents (thickeners). In a preferred embodiment, the combined amount of CaO and filler (F) in the epoxy resin component (A) is 20 to 55 wt.-

%, based on the total weight of epoxy resin component (A). In another preferred embodiment, the combined amount of CaO and filler (F) in the epoxy resin component (A) is 25 to 55 wt.-%, such as 30 to 55 wt.-%, based on the total weight of epoxy resin component (A).

In another embodiment, the weight ratio of CaO to filler (F) in the epoxy resin component (A) is at least 0.1. In a preferred embodiment, the weight ratio of CaO to filler (F) in the epoxy resin component (A), and more preferably is at least 0.5, such as at least 0.8 or at least 1.0.

In a preferred embodiment, the combined amount of CaO and filler (F) in the multi-component epoxy resin material is 40 to 50 wt.-%, based on the total weight of the multi-component epoxy resin material, the weight ratio of CaO to filler (F) in the multi-component epoxy resin material is 0.2 to 3.0, the combined amount of CaO and filler (F) in the epoxy resin component (A) is 40 to 50 wt.-%, based on the total weight of epoxy resin component (A), and the weight ratio of CaO to filler (F) in the epoxy resin component (A) is at least 0.2.

Further conceivable additives to the epoxy resin component (A) are thixotropic agents, such as optionally organically post-treated fumed silica, bentonites, alkyl and methyl celluloses and rhizinus oil derivatives, plasticizers such as phthalic or sebacic esters, stabilizers, antistatic agents, thickeners, flexibilizers, curing catalysts, rheological aids, wetting agents, coloring additives such as dyes or pigments, for example for different coloring of the components for better control of their mixing, as well as wetting agents, phlegmatizers, dispersants and other reaction rate control agents, or mixtures of two or more thereof.

<u>Component (B)</u>

Component (B) of the multi- epoxy resin material comprises at least one hardener ("*hardener component (B)*"). The hardener comprises at least one compound commonly used for epoxy curing (reaction partner in polyaddition). In this context, the term "*hardener*" preferably means at least one compound customary for epoxy curing with or without added fillers and/or further additives, such as water, thickeners and/or further additives, in other words, the complete hardener component. Common additives may be added, such as fillers, as already described above in connection with component (A). The other additives of the hardener component of an epoxy-based luting mortar system according to the invention can be provided, for example, in a weight proportion totalling 0.01 to 70% by weight, e.g. 1 to 40% by weight, based on the hardener component (B).

The compounds commonly used for epoxy curing (acting as reactants in polyaddition) are in particular those having two or more groups selected from amino, imino, and mercapto, for example corresponding amines, thiols, or aminothiols, or mixtures thereof, for example as mentioned in Lee H and Neville K, "Handbook of Epoxy Resins" (New. York: McGraw-Hill), 1982.

According to the invention, one or more amines, preferably polyamines, may be used as reactive hardener components. Suitable amines for use in the curing agent are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane(ethylenediamine), 1,2-propanediamine, 1,3-propanediamine, 1,4-diaminobutane, 2,2-dimethyl-1, 3-propanediamine(neopentanediamine), diethylaminopropylamine (DEAPA), 2-methyl-1, 5-diaminopentane, 1,3-diaminopentane, 2,2,4- or 2,4,4-trimethyl-1, 6-diaminohexane and mixtures thereof (TMD), 1-Amino-3-aminomethyl-3, 5,5-trimethylcyclohexane, 1,3-bis(aminomethyl)cyclohexane, 1,2-bis(aminomethyl)cyclohexane, hexamethylenediamine (HMD), 1, 2- and 1,4-diaminocyclohexane (1,2-DACH and 1,4-DACH), bis(4-aminocyclohexyl)methane, bis(4-amino-3-methylcyclohexyl)methane, diethylenetriamine (DETA), 4-Azaheptane-1, 7-diamine, 1,11-diamino-3, 6,9-trioxundecane, 1,8-diamino-3, 6-dioxaoctane, 1,5-diamino-methyl-3-azapentane, 1,10-diamino-4, 7-dioxadecane, bis(3-aminopropyl)amine, 1,13-diamino-4,7, 10-trioxatridecane, 4-aminomethyl-1, 8-diaminooctane, 2-butyl-2-ethyl-1, 5-diaminopentane, N, N-bis-(3-aminopropyl)methylamine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2. 2.1]hept-2-yl]methylamine (NBDA, norbornandiamine), dimethyldipropylenetriamine, dimethylaminopropyl-aminopropylamine (DMAPAPA), 3-aminomethyl-3, 5,5-trimethylcyclohexylamine (isophoronediamine (IPD)), diaminodicyclohexylmethane (PACM), mixed polycyclic amines (MPCA) (e.g. E.g., Ancamine 2168), dimethyldiaminodicyclohexylmethane (Laromin C260), 2,2-bis(4-aminocyclohexyl)propane.

Polyamines preferred according to the invention are 2-methylpentanediamine (DYTEK A), 1-amino-3-aminomethyl-3, 5,5-trimethylcyclohexane (IPD), 1,3-benzenedimethanamine (m-xylylenediamine, mXDA), 1,4-benzenedimethanamine (p-xylylenediamine, PXDA), 1,6-diamino-2, 2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 1,3-bisaminomethylcyclohexane (1,3-BAC), (3(4),8(9)bis(aminomethyl)dicyclo[5. 2.1. 02,6]decane (mixture of isomers, tricyclic primary amines; TCD diamine), 1,14-diamino-4, 11-dioxatetradecane, dipropylenetriamine, 2-methyl-1, 5-pentanediamine, N, N'-dicyclohexyl-1, 6-hexanediamine, N, N'-dimethyl-1, 3-diaminopropane, N, N'-diethyl-1, 3-diaminopropane, N, N-dimethyl-1, 3-diaminopropane, secondary polyoxypropylenediamines and triamines, 2,5-diamino-2, 5-dimethylhexane, bis(aminomethyl)tricyclopentadiene, 1,8-diamino-p-menthane, bis-(4-amino-3, 5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, or piperazine.

The one or more epoxy-reactive amines are preferably present in component (B) in an amount of 10 to 90 wt.-%, more preferably 35 to 60 wt.-%, based on the total weight of component (B).

In addition to one or more amines, component (B) according to the present invention may further contain a salt (S) as an accelerator. According to the invention, the salt (S) is at least one salt selected from the group consisting of salts of nitric acid, salts of nitrous acid, salts of halogens, salts of trifluoromethanesulfonic acid, and combinations thereof. Preferably, the salt (S) is at least one salt selected from the group consisting of salts of nitric acid, salts of halogens, salts of trifluoromethanesulfonic acid, as well as combinations thereof. It has been found to be particularly preferred that the salt (S) is selected from the group consisting of nitrates ($NO_3^-$), iodides ($I^-$), triflates ($CF_3SO_3^-$), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as $Ca(NO_3)_2$ or $NaNO_3$. It is also possible to use as salt (S) a solution of a salt in nitric acid such as a solution containing $Ca(NO_3)_2/HNO_3$. To prepare this solution, $CaCO_3$ is dissolved in $HNO_3$.

Suitable salts of nitrous acid are in particular alkali metal nitrites, alkaline earth metal nitrites, lanthanoid nitrites, aluminum nitrite, ammonium nitrite and mixtures thereof. Corresponding salts of nitrous acid are commercially available. Preferably, alkali metal nitrites and/or alkaline earth metal nitrites are used as salts of nitrous acid, such as $Ca(NO_2)_2$.

Suitable salts of the halogens are in particular alkali metal halides, alkaline earth metal halides, lanthanide halides, aluminum halides, ammonium halides and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal nitrates and/or alkaline earth metal nitrates are used as salts of the trifluoromethanesulfonic acid, such as $Ca(CF_3SO_3)_2$.

In principle, the cations of the salt (S) can be organic, inorganic or a mixture thereof. Preferably, the cation of the salt (S) is an inorganic cation.

As organic cations, for example, ammonium cations substituted with organic radicals, such as tetraethylammonium cations substituted with $C_1$-$C_6$ alkyl radicals, can be considered.

Preferably, cations selected from the group consisting of alkali metals, alkaline earth metals, lanthanides, aluminum, ammonium ($NH_4^+$) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt (S). It is particularly preferred that the cation of salt (S) is selected from the group consisting of sodium, calcium, aluminum, ammonium and mixtures thereof.

The salt (S) may be included in component (B) in an amount of e.g. up to 12 wt.-%, such as up to 10 wt.-, preferably up to 8 wt.-%, based on the total weight of component (B).

Thus, the following compounds or components are particularly suitable as salt (S): $Ca(NO_3)_2$ (calcium nitrate, usually used as $Ca(NO_3)_2$ tetrahydrate), a mixture of $Ca(NO_3)_2/HNO_3$, $KNO_3$ (potassium nitrate), $NaNO_3$ (sodium nitrate), $Mg(NO_3)_2$ (magnesium nitrate, usually used as $Mg(NO_3)_2$ hexahydrate), $Al(NO_3)_3$ (aluminum nitrate, usually used as $Al(NO_3)_3$ nonahydrate), $NH_4NO_3$ (ammonium nitrate), $Ca(NO_2)_2$ (calcium nitrite), NaCl (sodium chloride), NaBr (sodium bromide), NaI (sodium iodide), $Ca(CF_3SO_3)_2$ (calcium triflate), $Mg(CF_3SO_3)_2$ (magnesium triflate), $Li(CF_3SO_3)_2$ (lithium triflate).

Component (B) of the invention may comprise one or more salts (S). The salts may be used singly or in a mixture of two or more of the said salts.

To improve the solubility properties of the salt (S) in the hardener composition, it may be provided that the salt (S) is dissolved in a suitable solvent and used accordingly as a solution. Organic solvents such as methanol, ethanol and glycerol are suitable for this purpose. However, water can also be used as solvent, if necessary also in mixture with the aforementioned organic solvents. To prepare the corresponding salt solutions, the salt (S) is added to the solvent and stirred, preferably until completely dissolved.

In addition, component (B) according to the present invention may optionally include co-accelerators used in combination with the above salt (S).

Examples of suitable co-accelerators are in particular tris-2,4,6-dimethylaminomethylphenol, 2,4,6-tris(dimethylamino)phenol and bis[(dimethylamino)methyl]phenol. A suitable co-accelerator mixture contains 2,4,6-tris(dimethylaminomethyl)phenol and bis(dimethylaminomethyl)phenol. Mixtures of this kind are commercially available, for example as Ancamine® K54 (Evonik, Germany).

These co-accelerators are preferably contained in component (B) in a weight proportion of from 0.001 to 5 wt.%, based on the total weight of the hardening component (B).

As an alternative, the co-accelerator can be a phenol derivative. The phenol derivative is preferably selected from the group consisting of polyphenols from the group of novolac resins, styrenated phenols, phenolic lipids and combinations thereof.

Compounds of the following formula (III) are preferably used as polyphenols from the group of novolac resins:

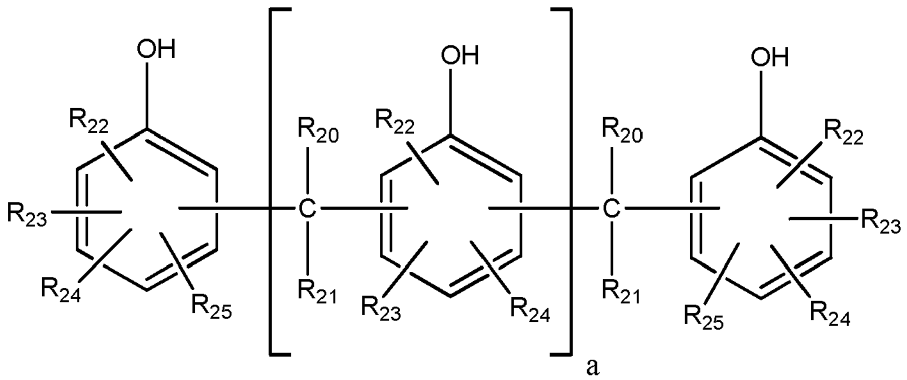

(III),

in which

$R_{20}$ and $R_{21}$ each denote, independently of one another, H or $-CH_3$;
$R_{22}$, $R_{23}$, $R_{24}$ and $R_{25}$ each denote, independently of one another, H, $-CH_3$ or an aliphatic functional group, preferably a linear, optionally partially unsaturated, unbranched hydrocarbon chain having up to 15 carbon atoms or an alkaryl functional group, preferably $-C_8H_9$; and where
a is 0 to 20, preferably 0 to 15.

The polyphenol from the group of novolac resins particularly preferably corresponds to the following formula (IV):

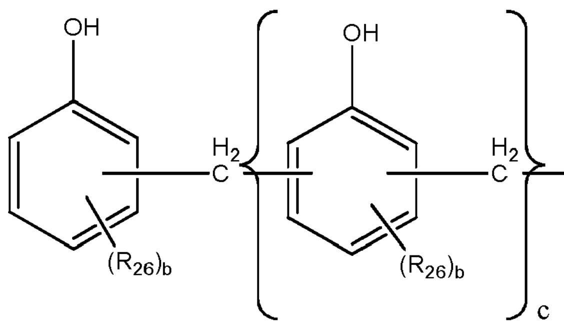

(IV)

in which

$R_{26}$ denotes a C1-C15 alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (IV), in which $R_{26}$ denotes $CH_3$ and b is 1 or 2, or $R_{26}$ denotes tert.-butyl or a C1-C15 alkyl group and b is 1, and where c is 0 to 15, preferably 1 to 15.

The term styrenated phenols is understood to mean the electrophilic substitution products of phenols such as phenol, pyrocatechol, resorcinol, hydroquinone, hydroxyhydroquinone, phloroglucinol, pyrogallol, o-cresol, m-cresol or p-cresol with styrene or styrene analogs, such as vinyltoluene, vinylpyridine or divinylbenzene, in particular styrene. The styrenated phenol is particularly preferably selected from the reaction products of styrene and phenol which contain

mixtures of compounds or individual compounds of the following formulae:

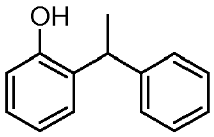,
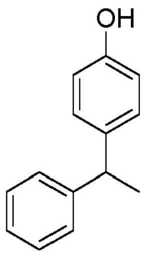,
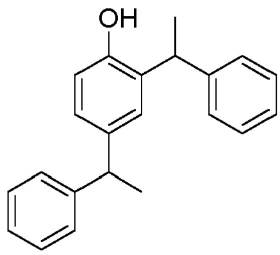,
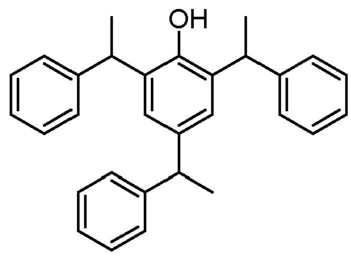

or 2,6-distyrylphenol, such as oligo- and polystyrene compound parts or compounds (products obtained from cationic polymerization of styrenes in phenols, oligomeric or polymeric products).

The term "*phenolic lipids*" is a collective term for a class of natural products that includes long aliphatic chains and phenolic rings. The phenolic lipid is preferably selected from alkyl catechols, alkyl phenols, alkyl resorcinols and anacardic acids. The at least one phenolic lipid is particularly preferably an alkylphenol selected from propylphenol, butylphenol, amylphenol, octylphenol, nonylphenol, dodecylphenol and cardanol-based compounds.

The hardener component (B) according to the invention can comprise one or more phenol derivatives. The phenol derivatives can be used both individually and in a mixture of two or more of the specified phenol derivatives. The hardener component (B) according to the invention preferably contains the phenol derivative in a proportion of from 4 to 25 wt.%, preferably from 10 to 20 wt.%, based on the total weight of the curing agent composition.

In a preferred embodiment, the phenol derivative is at least one polyphenol selected from the group of novolac resins and is combined with a salt (S) selected from the group of nitrates. The weight percent ratio of all phenol derivatives, in particular the polyphenols from the group of novolac resins, to all salts (S) in the hardener component (B) according to the invention is preferably 250:1 to 1:4, more preferably 40:1 to 1:2.

Alternatively, according to the invention, Mannich bases can be used as hardening agent in component (B). Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, preferably phenol or a styrolized phenol, styrolized resorcinol or bisphenol A.

The selected amine for preparing the Mannich base has a structure according to formula (I):

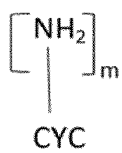 (I),

wherein "CYC" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms and each of the two rings carrying at least one of the m [$NH_2$] groups, or a3) a fused di- or polycyclic saturated ring system having 6 to 12 ring atoms and
m is a positive integer greater than or equal to 2.

The selected amine can also be used in the form of one of its salts. In these cases, one or both hydrogen atoms of the m amino groups [-$NH_2$] are replaced by alkali and/or alkaline earth metals. The use of corresponding salts of the selected amines makes it possible to adjust the solubility properties of the selected amine.

The selected amines for the preparation of the Mannich base are characterized by having at least two $NH_2$ groups directly bonded to different ring atoms. Preferably, the selected amines have exactly two $NH_2$ groups directly bonded to different ring atoms. Accordingly, in a preferred embodiment, m is equal to 2.

The definitions of "*CYC*" described in variants a1), a2) and a3) may optionally be methyl- or dimethyl-substituted per ring in each case.

The definitions of "*CYC*" described in variants a1), a2) and a3) preferably have an aliphatic structure, i.e. the rings and, if appropriate, the linkage of two rings consist only of carbon and hydrogen atoms. However, it is also possible that the rings according to variants a1), a2) and a3) have heteroatoms.

In these cases, the ring in variant a1) or the ring system in variants a2) and a3) may have 0 to 3 nitrogen atoms,

0 to 3 oxygen atoms and 0 to 1 sulphur atoms.

Preferably, the number of ring atoms of the definitions of "*CYC*" described in variants a1), a2) and a3) 10 is 6 to 9, particularly preferably 6.

Particularly preferably, the selected amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA) and methylcyclohexyldiamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-aminomethyl-3,5,5-trimethylcyclohexane (I PDA), 1,3-bis(aminomethyl)cyclohexane (1,3-BAC), iaminodicyclohexyl methane (PACM), methylcyclohexyl diamine (mCDA) and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base can also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyl-tri(m)ethoxysilane, bis-(gamma-trimethoxysilylpropyl)amine, or mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor can advantageously be added to the reaction mixture as an aqueous solution, in particular at an elevated temperature of about 50°C to 90°C, and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde can be used as the aldehyde precursor, which decompose to formaldehyde by heating in the presence of water.

Preferably, the selected amine is present in excess during the reaction with the phenolic compound and the aldehyde, so that the Mannich base has free amino groups.

In another embodiment, hardener component (B) according to the present invention may also comprise as the hardening agent mixtures of (i) styrenated phenols with (ii) amines. Amines usable in the mixture with styrenated phenols (which amines can be present as such or in salt form) include those mentioned above, especially N,N'-bis(3-amino-n-propyl)piperazine (BAPP), 1,3-bis(aminomethyl)cyclohexane (BAC), N-(2-aminoethyl)piperazine (AEP) or 3-aminomethyl-3,5,5-trimethylcyclohexylamine (isophoronediamine, IPDA), or other low molecular weight polyamines ("*polyamines*" also including diamines), especially oligomeric or monomeric aliphatic, cycloaliphatic, cycloheteroaliphatic, aromatic or araliphatic diamines, such as especially xylylenediamines, more especially m-xylylenediamine (1,3-bis(amino-methyl)benzene, MXDA); aliphatic polyamines, for example $C_1$-$C_{10}$alkane-di- or -poly-amines, e.g. 1,2-diaminoethane, trimethylhexane-1,6-diamine, diethylenetriamine or triethylenetetraamine; oligomeric diamines of the formula $H_2N-(CH_2)_i-NH-[(CH_2)_jNH]_k-(CH_2)_l-NH_2$, wherein i, j and l are each independently of the others from 2 to 4 and k is 0, 1 or 2, especially "*triethylenetetramine*" (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more especially m-xylylenediamine, with one or more other polyamines, especially BAC, or more especially one or more araliphatic diamines, especially m-xylylenediamine itself, or mixtures of BAC and m-xylylenediamine.

Styrenated phenols in accordance with this embodiment are the reaction products (electrophilic substitution products) of phenols (such as phenol, pyrocatechol, resorcinol, hydroquinone, hydroxyhydroquinone, phloroglucinol, pyrogallol, o-cresol, m-cresol or p-cresol, especially phenol) with styrene or styrene analogues, such as vinyltoluene, divinylbenzene or 4-vinylpyridine, especially with styrene, especially "*styrenated phenol*" itself (reaction product of styrene and phenol; CAS Reg. No. 61788-44-1), which, by way of example, can contain mixtures of compounds or individual compounds of the following formulae:

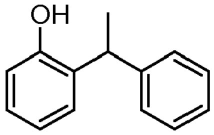, 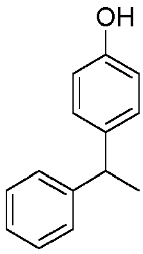, 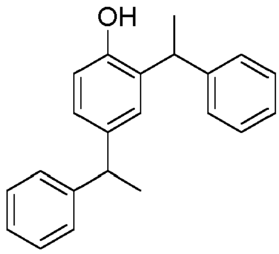, 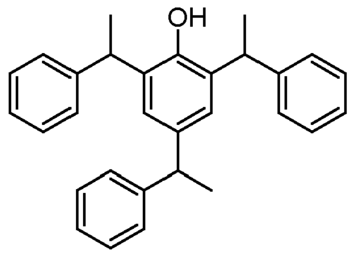

or 2,6-distyryl phenol, and also oligo- and poly-styrene portions or compounds (oligomeric or polymeric products obtained from cationic polymerisation of styrenes in phenols), for example of the formula

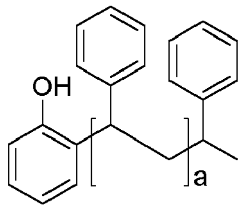

wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

Application and Use

By a multi-component epoxy resin material in the sense of the present invention is meant in particular a kit with two or more components (preferably a 2-component system) with component (A) containing one or more epoxy-based reactive synthetic resin, and hardener (component (B)), where further additives may be provided in one or both of the components, wherein the mutually reactive components (A) and (B) and optionally further separate components are contained in such a way that they cannot react with one another during storage, preferably in such a way that they do not come into contact with one another prior to use, which nevertheless makes it possible to mix and, if necessary, introduce the components (A) and (B) and, if necessary, further components for fixing at the desired location, for example directly in front of or in a hole or gap, in such a way that the curing reaction can take place there. Also suitable are cartridges, for example of plastic, ceramic or in particular glass, in which the components are arranged separated from one another by (for example when an anchoring element is driven into a hole or gap, such as a drilled hole) destructible boundary walls or integrated separate destructible containers, for example as nested cartridges, such as ampoules; as well as in particular multi-component or preferably two-component cartridges, in the chambers of which the preferably two components (in particular components (A) and (B)) of the luting mortar according to the invention are contained for storage prior to use, wherein preferably a static mixer can also be part of the corresponding kit. The use of a fixing mortar according to the invention at the desired place of use is then carried out by mixing the associated components.

Components (A) and (B) are preferably mixed in a ratio that gives a largely balanced stoichiometry according to the EEW and AHEW values. For the intended use of the multi-component epoxy resin material, the epoxy resin component (A) and the hardener component (B) are emptied from the separate chambers and mixed in a suitable device, for example a static mixer or a dissolver. The mixture of epoxy resin component (A) and hardener component (B) is then introduced into the previously cleaned borehole by means of a known injection device. The component to be fixed is then inserted into the mortar mass and adjusted. The reactive components of the hardener component (B) react with the epoxy resins of the resin component (A) under polyaddition so that the epoxy resin compound cures within a desired time.

The multi-component epoxy resin material according to the invention is preferably used for construction purposes. The term "*for construction purposes*" means construction bonding of concrete/concrete, steel/concrete or steel/steel or one of the mentioned materials on other mineral materials, structural reinforcement of building elements made of concrete, masonry and other mineral materials, reinforcement applications with fiber-reinforced polymers of construction objects, chemical fastening on surfaces made of concrete, steel or other mineral materials, in particular the chemical fixing of structural elements and anchoring means, such as anchor rods, anchor bolts, (threaded) rods, (threaded) sleeves, concrete irons, screws and the like, in drilled holes in various substrates, such as (steel) concrete, masonry, other mineral materials, metals (e.g. steel), ceramics, plastics, glass and wood.

Preferably, the multi-component epoxy resin material described above are used for chemical fixing of anchoring elements in a hole or gap in a building substrate.

The invention further relates to a method for fixing an anchoring element in a hole or crevice in a building substrate, in which a multicomponent epoxy resin material, which as described above comprises in one component (A) reactive epoxy resin-based, and in a further component (B) comprises hardener, and an anchoring element are introduced into the hole or crevice and allowed to cure.

Further advantages of the invention will be apparent from the following description of preferred embodiments, which, however, are not to be understood as limiting in any way. All embodiments of the invention may be combined within the scope of the invention.

## EXAMPLES

All chemicals and ingredients of the compositions listed herein below are commercially available and have been used at commercial grade unless otherwise noted.

### General Procedure for the Production of Chemical Mortars

Preparation of epoxy resin component (A)

In a plastic bucket, the liquid epoxy resins were mixed with a wood spatula. Then, the filler and thickener were added and by hand premixed before mixing it further into a dissolver (PC Laborsystem, volume 1L) during 8.5 minutes under 80 mbar reduced pressure at 3500 rpm.

The determination of the epoxy equivalent weight (EEW, i.e. the amount of resin in g containing 1 mole of epoxy groups) values in the examples below is carried out in a manner known to the skilled person on the basis of the formulation of the reaction mixture from the known H equivalents of the reactants and raw materials used, from which they are calculated. The EEW values are usually indicated on the starting materials by the manufacturers or they are determined or calculated according to known methods.

Preparation of hardener component (B)

For the specific case of the examples where inorganic accelerated hardeners are used. The calcium nitrate was used as a 80% solution in glycerin. For that, 400 g of $Ca(NO_3)_2$ tetrahydrate were added to 100 g of glycerin and stirred at 50°C until complete solution (about 3 hours).

For the preparation of the B component, in a plastic bucket, the specified amount of accelerator or accelerator mixture as indicated (in wt.-%) in the below tables was added and dissolved in the amine mixture. Then, the filler and thickener were added and by hand premixed before mixing it further into a dissolver (PC Laborsystem, volume 1L) during 8.5 minutes under 80 mbar reduced pressure at 3500 rpm.

The AHEW (amine hydrogen equivalent weight, amount of resin containing 1 mol reactive H) is determined in a manner known to those skilled in the art on the basis of the formulation of the reaction mixture from the known H equivalents of the reactants and raw materials used, from which they are calculated.

For a simple amine, the calculation of the AHEW is explained using meta-xylylenediamine (MW = 136 g/mol, functionality = 4 eq/mol) as a purely illustrative example:

$$AHEW = \frac{M_W}{Functionality} = \frac{136}{4}\left[\frac{g}{eq}\right] = 34\left[\frac{g}{eq}\right]$$

Mortars mixing and injection in the borehole:

The components (A) and (B) were mixed with a stoichiometry one to one based on their EEQ and AHEQ values using a speedmixer.

### Analytical methods

Curing speed tests using Yokogawa

Curing tests of the mortar formulations containing different amounts of Millisil and CaO were made using a Yokogawa oscilloscope connected to thermocouples. Using this setup, time vs temperature curves were recorded. The

samples used and the results obtained are summarized in Table 4.

Pull Out Test

To determine the bond strength in concrete, pull out experiments under the R1, B3 (80°C), B7 DD (meaning Diamond Drilled) and B8 HD (meaning Hammer Drilled)) conditions were made following the description given by the guideline ETAG 001 part 5 (Guideline For European Technical Approval Of Metal Anchors For Use In Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm or 72 mm embedment depth (check details in tables).

R1: Reference boreholes:

In these experiments, threaded rods (size M12) were installed in 14 mm cleaned (2x compressed air 6 bar, 2x brushed and 2x compressed air 6 bar) hammered drilled boreholes made in dry concrete plates (C20/25) with 60 mm or 72 mm embedment depth (check details in tables). After 24 h curing time at R1, the bond strength was determined in R1 pull-out tests.

B7: Robustness in water saturated concrete:

In these experiments, threaded rods (size M12) were installed in 14 mm cleaned diamond drilled boreholes made in water saturated concrete plates (C20/25) with 60 mm or 72 mm embedment depth (check details in tables). Cleaning B7 DD: 1xflush/1xVAC/1xBrush/1x6bar (blow 1 sec each cm). Set within 10 min Cleaning

B8: Robustness in water filled holes in water saturated concrete:

In these experiments, threaded rods (size M12) were installed in 14 mm cleaned hammered drilled and water filled boreholes made in water saturated concrete plates (C20/25) with 60 mm or 72 mm embedment depth (check details in tables). Cleaning B8 HD: 1xVAC/1xBrush/1x6bar (blow 1 sec each cm). Fill with water. Setting with piston plug between 30min to 2hour

For the B7 and B8 experiments, the pull out tests were performed after 48 h curing time.

In Tables 1a and 1b (examples 1-3 and comparative examples 1-7), an epoxy-amine mortar system is described containing all the same components except the filler. In these examples the filler, quartz flour is exchanged by an oxide or hydroxide. In the comparative examples, fillers like MgO, $Mg(OH)_2$ or $Ca(OH)_2$ were exchanged by Millisil W12 in A or A+B. For the inventive examples, CaO was exchanged by Millisil W12 in the A component.

Table 1a: Composition of inventive examples IE 1-3 and bond strength at RT, 80°C and under wet conditions

| | IE 1 | IE 2 | IE 3 |
|---|---|---|---|
| **Component A** | | | |
| Araldite® GY 240 | 25.07 | 25.07 | 25.07 |
| Araldite® GY 282 | 13.50 | 13.50 | 13.50 |
| Araldite® DY-026 | 4.82 | 4.82 | 4.82 |
| Araldite® DY-T-CH | 4.82 | 4.82 | 4.82 |
| Dynasylan® GLYMO | 3.3 | 3.3 | 3.3 |
| CAB-O-SIL® TS-720 | 2.63 | 2.63 | 2.63 |
| Millisil® W12 | 35.24 | 35.24 | 35.24 |
| CaO | 10.62 | 10.62 | 10.62 |
| | CaO Aldrich | Nekafin 2 | Nekafin 0 |
| EEQ [g/eq] | 303 | 303 | 303 |
| **Component B** | | | |
| Vestamin® IDP | 19.7 | 19.7 | 19.7 |

(continued)

| Component B | | | |
|---|---|---|---|
| 1,3-BAC | 19.6 | 19.6 | 19.6 |
| CAB-O-SIL® TS-720 | 5 | 5 | 5 |
| Millisil® W12 | 49.4 | 49.4 | 49.4 |
| $Ca(NO_3)_2$ (80% glycerin) | 6.3 | 6.3 | 6.3 |
| AHEQ [g/eq] | 99 | 99 | 99 |
| R1 [MPa] | 37 | 38 | 38 |
| B7 [MPa] | 37 | 37 | 37 |
| B3 (80°C) [MPa] | 32 | 34 | 32 |

Table 1b: Composition of comparative examples CE 1-7 and bond strength at RT, 80°C and under wet conditions

| | CE 1 | CE 2 | CE 3 | CE 4 | CE 5 | CE 6 | CE 7 |
|---|---|---|---|---|---|---|---|
| **Component A** | | | | | | | |
| Araldite® GY 240 | 25.69 | 25.69 | 24.90 | 24.90 | 24.90 | 25.72 | 25.72 |
| Araldite® GY 282 | 13.83 | 13.83 | 13.41 | 13.41 | 13.41 | 13.85 | 13.85 |
| Araldite® DY-026 | 4.94 | 4.94 | 4.79 | 4.79 | 4.79 | 4.95 | 4.95 |
| Araldite® DY-T-CH | 4.94 | 4.94 | 4.79 | 4.79 | 4.79 | 4.95 | 4.95 |
| Dynasylan® GLYMO | 3.39 | 3.39 | 3.28 | 3.28 | 3.28 | 3.39 | 3.39 |
| CAB-O-SIL® TS-720 | 2.7 | 2.7 | 2.62 | 2.62 | 2.62 | 2.7 | 2.7 |
| Millisil® W12 | 42.97 | 42.97 | 35.01 | 35.01 | 35.01 | 43.02 | 43.02 |
| Additional Filler | 1.54 | 1.54 | 11.21 | 11.21 | 11.21 | 1.42 | 1.42 |
| | Magnesia 714 | Magnesia 7291 | MgO Aldrich | Magnesia 2926 | Magnesia 312 | Nekablanc 0 | Nekapur 2 |
| EEQ [g/eq] | 303 | 303 | 303 | 303 | 303 | 303 | 303 |
| **Component B** | | | | | | | |
| Vestamin® IDP | 19.74 | 19.74 | 19.7 | 19.7 | 19.7 | 19.76 | 19.76 |
| 1,3-BAC | 19.64 | 19.64 | 19.6 | 19.6 | 19.6 | 19.66 | 19.66 |
| CAB-O-SIL® TS-720 | 5.01 | 5.01 | 5 | 5 | 5 | 5.02 | 5.02 |
| Millisil® W12 | 49.72 | 49.72 | 49.4 | 49.4 | 49.4 | 47.78 | 47.78 |
| Additional Filler | 1.59 | 1.59 | - | - | - | 1.47 | 1.47 |
| | Magnesia 714 | Magnesia 7291 | | | | Nekablanc 0 | Nekapur 2 |
| $Ca(NO_3)_2$ (80% in glycerin) | 6.31 | 6.31 | 6.3 | 6.3 | 6.3 | 6.32 | 6.32 |
| AHEQ [g/eq] | 99 | 99 | 99 | 99 | 99 | 99 | 99 |
| R1 [MPa] | 37 | 37 | 41 | 41 | 40 | 38 | 39 |
| B7 [MPa} | 35 | 34 | 34 | 33 | 35 | 35 | 34 |

(continued)

| Component B | | | | | | | |
|---|---|---|---|---|---|---|---|
| B8 (80°C) [MPa] | 27 | 26 | 33 | 32 | 29 | 29 | 29 |

It was found that CaO can not only increase loads under B3 (80°C) conditions but that this improvement is also visible on wet concrete like it is shown in Tables 1a and 1b above, or Tables 2 and 3 below. From this data, it can be seen that the absolute load value under wet conditions and 80°C, increases only when CaO is used.

Additionally, the concentration range in which the CaO is needed to have higher loads under wet conditions and if this effect was also appreciable for flooded boreholes, where much more water is present, was determined. For that, a stepwise exchange of Millisil® W12 by Nekafin® 2 (CaO with $d_{50}$ < 10 μm) was made, and then in every step the bond strength under wet conditions and in flooded boreholes was observed.

Table 2: Composition of inventive examples IE 4-6 and their comparative example (CE 8) and bond strength at R1. B7 (DD) and B8 (HD) conditions

| | CE 8 | IE 4 | IE 5 | IE 6 |
|---|---|---|---|---|
| **Component A** | | | | |
| Araldite® GY 240 | 35.0 | 35.0 | 35.0 | 35.0 |
| Araldite® GY 282 | 18.8 | 18.8 | 18.8 | 18.8 |
| Araldite® DY-026 | 6.7 | 6.7 | 6.7 | 6.7 |
| Araldite® DY-T-CH | 6.7 | 6.7 | 6.7 | 6.7 |
| Millisil® W12 | 30.0 | 23.65 | 14.46 | 0.00 |
| CAB-O-SIL® TS-720 | 2.7 | 2.66 | 2.60 | 2.51 |
| Nekafin® 2 | 0.0 | 7.38 | 18.06 | 34.87 |
| EEQ [g/eq] | 232 | 232 | 232 | 232 |
| **Component B** | | | | |
| mXDA | 36.8 | 36.8 | 36.8 | 36.8 |
| Millisil® W12 | 57.3 | 57.3 | 57.3 | 57.3 |
| CAB-O-SIL® TS-720 | 4.0 | 4.0 | 4.0 | 4.0 |
| $Ca(NO_3)_2$ (80% in glycerin) | 1.9 | 1.9 | 1.9 | 1.9 |
| AHEQ [Mpa] | 74 | 74 | 74 | 74 |
| R1 [Mpa] | 38 | 39 | 38 | 38 |
| B7 [Mpa] | 28 | 28 | 31 | 31 |
| B8 [Mpa] | 20 | 25 | 27 | 29 |

With 20% CaO exchange, the effect on B8 HD experiments is also significant. Preferably, the CaO should be used in at least about 50% weight in the A component, to show a stronger effect (Table 2).

In order to check if this effect was visible for **different hardeners and amine mixtures,** three additional hardeners were selected:

- Mannich Bases hardener (Beckopox SEH 2627 based on mXDA)
- Styrenated Phenol accelerator (Novares LS 500 diluted in 1,3-BAC and mXDA)
- Novolac accelerator (Phenolite TD 2131 dissolved in mXDA and Dytek A),

and four different amines: IPDA, BAC, Baxxodur (cycloaliphatic amines) and Dytek® A (aliphatic amine). For each of the examples, a comparative example with only Millisil® W12 as filler and the corresponding formulations in which the half of Millisil® W12 was replaced by Nekafin 2 (CaO fine) were made.

Table 3: Composition of inventive examples IE 7-13 and their comparative examples CE 9-15 and bond strength at R1. B7 (DD) and B8 (HD) conditions

| | CE 9 | IE 7 | CE 10 | IE 8 | CE 11 | IE 9 | CE 12 | IE 10 | CE 13 | IE 11 | CE 14 | IE 12 | CE 15 | IE 13 |
|---|---|---|---|---|---|---|---|---|---|---|---|---|---|---|
| **Component A** | | | | | | | | | | | | | | |
| Araldite® GY 240 | 35.00 | 33.74 | 35.00 | 33.74 | 35.00 | 33.74 | 35.00 | 33.74 | 35.00 | 33.74 | 35.00 | 33.74 | 35.00 | 33.74 |
| Araldite® GY 282 | 18.84 | 18.17 | 18.84 | 18.17 | 18.84 | 18.17 | 18.84 | 18.17 | 18.84 | 18.17 | 18.84 | 18.17 | 18.84 | 18.17 |
| Araldite® DY-026 | 6.73 | 6.49 | 6.73 | 6.49 | 6.73 | 6.49 | 6.73 | 6.49 | 6.73 | 6.49 | 6.73 | 6.49 | 6.73 | 6.49 |
| Araldite® DY-T-CH | 6.7 | 6.5 | 6.7 | 6.5 | 6.7 | 6.5 | 6.7 | 6.5 | 6.7 | 6.5 | 6.7 | 6.5 | 6.7 | 6.5 |
| Millisil® W12 | 30.0 | 14.46 | 30.0 | 14.46 | 30.0 | 14.46 | 30.0 | 14.46 | 30.0 | 14.46 | 30.0 | 14.46 | 30.0 | 14.46 |
| CAB-O-SIL® TS-720 | 2.7 | 2.60 | 2.7 | 2.60 | 2.7 | 2.60 | 2.7 | 2.60 | 2.7 | 2.60 | 2.7 | 2.60 | 2.7 | 2.60 |
| Nekafin® 2 | 0.0 | 18.06 | 0.0 | 18.06 | 0.0 | 18.06 | 0.0 | 18.06 | 0.0 | 18.06 | 0.0 | 18.06 | 0.0 | 18.06 |
| EEQ [g/eq] | 235.0 | 235.0 | 235.0 | 235.0 | 235.0 | 235.0 | 235.0 | 235.0 | 244.0 | 244.0 | 244.0 | 244.0 | 244.0 | 244.0 |
| **Component B** | | | | | | | | | | | | | | |
| mXDA | | | | | | | | | 8 | 8 | | | 50 | 50 |
| IPDA | 36.8 | 36.8 | | | | | | | | | | | | |
| BAC | | | 36.8 | 36.8 | | | | | | | | | | |
| Baxxodur® | | | | | 36.8 | 36.8 | | | | | | | | |
| Dytek® A | | | | | | | 36.8 | 36.8 | 32.2 | 32.2 | | | | |
| Phenolite TD 2131 | | | | | | | | | 10.2 | 10.2 | | | | |
| Beckopox® SEH 2627 | | | | | | | | | | | 70.0 | 70.0 | | |
| Novares® LS 500 | | | | | | | | | | | | | 23.8 | 23.8 |
| Ancamine® K54 | | | | | | | | | 2.4 | 2.4 | 3.0 | 3.0 | 0.0 | 0.0 |
| Millisil® W12 | 57.3 | 57.3 | 57.3 | 57.3 | 55.4 | 55.4 | 57.3 | 57.3 | 42.8 | 42.8 | 24.3 | 24.3 | 23.2 | 23.2 |
| CAB-O-SIL® TS-720 | 4.0 | 4.0 | 4.0 | 4.0 | 4.0 | 4.0 | 4.0 | 4.0 | 4.4 | 4.4 | 2.7 | 2.7 | 3.0 | 3.0 |
| $Ca(NO_3)_2$ (80% in glycerin) | 1.9 | 1.9 | 1.9 | 1.9 | 3.8 | 3.8 | 1.9 | 1.9 | 0.0 | 0.0 | 0.0 | 0.0 | 0.0 | 0.0 |
| AHEQ [g/eq] | 115.8 | 115.8 | 96.7 | 96.7 | 89.7 | 89.7 | 78.8 | 78.8 | 74 | 74 | 76 | 76 | 68 | 68 |
| R1 [Mpa] | 32 | 32 | 37 | 37 | 32 | 30 | 32 | 36 | 36 | 36 | 38 | 36 | 36 | 40 |
| B7 [Mpa] | 31 | 30 | 29 | 33 | 31 | 29 | 21 | 24 | 22 | 25 | 25 | 26 | 21 | 25 |

(continued)

| Component B | | | | | | | | | | | | | | |
|---|---|---|---|---|---|---|---|---|---|---|---|---|---|---|
| B8 [Mpa] | 25 | 27 | 22 | 27 | 22 | 27 | 21 | 24 | 21 | 22 | 27 | 29 | 25 | 27 |

In most of these examples, increases in the B7 (wet borehole) diamond drilled and B8 (flooded borehole) hammer drilled results for the formulations containing CaO compared to their corresponding comparative examples were observed (Table 3).

In the literature it is further described that three types of CaO can be identified, depending on the reactivity of the CaO with water (see e.g. D. Tungulin, B. Behrenberg, J. Lutter, W. Wallmeier; "Quicklime with defined reaction time window for aerated autoclaved concrete production", ce papers. 2018, 2, 223-229 and B. Marbun "Kinetik der Hydratation von CaO und MgO", PhD Thesis, February 2006, Fakultät für Natur-und Materialwissenschaften, Technische Universität Clausthal, Germany). These types of CaO (quicklime) are classified as: soft burned, medium burned and hard burned depending on their reactivity to water. Therefore, these three types of quicklime in comparison with the Nekafin 2 (that is soft burned) were tested. Two concentrations were tested - a lower one (ca. 7 wt.-% in A) and a higher one (ca. 18 wt.-% in A).

Table 4: Composition of inventive examples IE 8, and 14-20 and their comparative example CE 10 and bond strength at R1. B7 (DD), B8 (HD) and B3 (80°C) conditions

| | **CE 10** | **IE 8** | **IE 14** | **IE 15** | **IE 16** | **IE 17** | **IE 18** | **IE 19** | **IE 20** |
|---|---|---|---|---|---|---|---|---|---|
| **Component A** | | | | | | | | | |
| Araldite® GY 240 | 35 | 33.74 | 33.74 | 33.74 | 33.74 | 35.0 | 35.0 | 35.0 | 35.0 |
| Araldite® GY 282 | 18.84 | 18.17 | 18.17 | 18.17 | 18.17 | 18.8 | 18.8 | 18.8 | 18.8 |
| Araldite® DY-026 | 6.73 | 6.49 | 6.49 | 6.49 | 6.49 | 6.7 | 6.7 | 6.7 | 6.7 |
| Araldite® DY-T-CH | 6.7 | 6.5 | 6.5 | 6.5 | 6.5 | 6.7 | 6.7 | 6.7 | 6.7 |
| Millisil® W12 | 30 | 14.46 | 14.46 | 14.46 | 14.46 | 23.65 | 23.65 | 23.65 | 23.65 |
| CAB-O-SIL® TS-720 | 2.7 | 2.6 | 2.6 | 2.6 | 2.6 | 2.66 | 2.66 | 2.66 | 2.66 |
| CaO | 0 | 18.06 Nekafin 2 | 18.06 Soft Burned | 18.06 Middle Burned | 18.06 Hard Burned | 7.38 Nekafin 2 | 7.38 Soft Burned | 7.38 Middle Burned | 7.38 Hard Burned |
| EEQ [g/eq] | 235 | 235 | 235 | 235 | 235 | 232 | 232 | 232 | 232 |
| **Component B** | | | | | | | | | |
| BAC | 36.8 | 36.8 | 36.8 | 36.8 | 36.8 | 36.8 | 36.8 | 36.8 | 36.8 |
| Millisil® W12 | 57.3 | 57.3 | 57.3 | 57.3 | 57.3 | 57.3 | 57.3 | 57.3 | 57.3 |
| CAB-O-SIL® TS-720 | 4 | 4 | 4 | 4 | 4 | 4.0 | 4.0 | 4.0 | 4.0 |
| $Ca(NO_3)_2$ (80% in glycerin) | 1.9 | 1.9 | 1.9 | 1.9 | 1.9 | 1.9 | 1.9 | 1.9 | 1.9 |
| AHEQ [g/eq] | 96.7 | 96.7 | 96.7 | 96.7 | 96.7 | 96.7 | 96.7 | 96.7 | 96.7 |
| R1 [Mpa] | 34 | 36 | 35 | 35 | 35 | 35 | 34 | 37 | 35 |
| B7 [Mpa] | 25 | | | | | 27 | 26 | 27 | 27 |
| B8 [Mpa] | 24 | 30 | 31 | 30 | 29 | 27 | 27 | 28 | 28 |
| B3 (80°C) [Mpa] | 24 | 28 | 27 | 27 | 28 | 28 | 27 | 26 | 26 |

It was observed that all three types of CaO show a positive effect for the wet concrete performance and the B3 (80°C) tests. In both cases of lower and higher CaO concentration, a positive effect was observed for all the examples

(Table 4).

Additionally, samples containing hydraulic cements were also tested. Portland cement is the most common hydraulic cement and produced by grinding a mixture of a clay and limestone together and heating to a temperature of 1450°C as described in Rikoto I.I, Nuhu, S. , Int. J. of Engineering Research and Reviews 2019, 7(1), 61-66. Hydraulic cements are made of four main mineral phases of the clinker: C3S: Alite ($3CaO{\cdot}SiO_2$), C2S: Belite ($2CaO{\cdot}BiO_2$), C3A: Tricalcium aluminate ($3CaO{\cdot}Al_2O_3$) or celite and C4AF: Brownmillerite ($4CaO{\cdot}Al_2O_3{\cdot}Fe_2O_3$). In the first step of production of the cement known as calcination, limestone (calcium carbonate) is burned producing CaO (lime or quicklime). Then, the CaO reacts with $SiO_2$ to produce alite and belite, with $Al_2O_3$ to form celite and in a last step with $Al_2O_3$ and $Fe_2O_3$ to form brownmillerite. Water, when mixed with cement, forms a paste causing the hardening of concrete through a process called hydration. Hydration is a chemical reaction in which the major compounds in cement form chemical bonds with water molecules and become hydrates or hydration products. Upon the addition of water, tricalcium silicate (alite) rapidly reacts to release calcium ions, hydroxide ions, and a large amount of heat. The pH quickly rises to over 12 because of the release of alkaline hydroxide (OH-) ions. Dicalcium silicate (belite) reacts with water in a similar manner compared to tricalcium silicate, but much more slowly and with less heat release, forming the same products. The other components of cement also react with water.

The free lime (CaO) as a composition phase in Portland cement clinker, has a strong influence on some properties of cement as mentioned by Shi, H., Zhao, Y., Li, W. in Cement and Concrete Research 2002, 32, 789-793. The free lime limit isn't the same for all cements; it depends on several factors, especially the temperature reached during the production process of the cement and the grains distribution in cement after grinding as described in Mtarfi, M. H.; Rais, Z.; Taleb, M. Journal of Materials and Environmental Sciences 2017, 8(7), 2541-2548.

Without the aim of being bound to a theory, it was assumed that different types of hydraulic cements, due to their capability of reacting with water and their CaO content could also show benefits in anchoring applications under wet concrete conditions. Therefore, cement-containing examples as shown in Tables 5 and 6 were prepared.

Table 5: Composition of inventive examples IE 21-25 and their references 16 and 17 and bond strength at R1. B7 (DD) and B8 (HD) conditions

| | **CE 16** | **IE 21** | **IE 22** | **CE 17** | **IE 23** | **IE 24** | **IE 25** |
|---|---|---|---|---|---|---|---|
| **Component A** | | | | | | | |
| Araldite® GY 240 | 35 | 34.8 | 34 | 22.2 | 20.8 | 20.9 | 20.8 |
| Araldite® GY 282 | 18.9 | 18.8 | 18.3 | 11.9 | 11.2 | 11.3 | 11.2 |
| Araldite® DY-026 | 6.7 | 6.7 | 6.5 | 4.3 | 4 | 4 | 4 |
| Araldite® DY-T-CH | 6.7 | 6.7 | 6.5 | 4.3 | 4 | 4 | 4 |
| Millisil® W12 | 24.5 | 18.3 | | 49.6 | | | |
| Dynasylan® GLYMO | 5.5 | 5.5 | 5.5 | 6.2 | 6.2 | 6.2 | 6.2 |
| CAB-O-SIL® TS-720 | 2.7 | 2.7 | 2.7 | 1.5 | 1.5 | 1.5 | 1.5 |
| Cement | | 6.5 | 26.5 | | 52.3 | 52.1 | 52.3 |
| Cement type | - | Supracem 45 | Supracem 45 | - | Dyckerhoff Weiß | HiPerCem | Supracem 45 |
| EEQ [g/eq] | 222 | 223 | 229 | 338 | 358 | 356 | 358 |
| **Component B** | | | | | | | |
| mXDA | 8.0 | 8.0 | 8 | | | | |
| IPDA | | | | 18.7 | 18.7 | 18.7 | 18.7 |
| BAC | | | | 18.8 | 18.8 | 18.8 | 18.8 |
| Dytek® A | 32.2 | 32.2 | 32.2 | | | | |
| Phenolite TD 2131 | 10.2 | 10.2 | 10.2 | | | | |
| Ancamine® K54 | 2.4 | 2.4 | 2.4 | 5.0 | 5.0 | 5.0 | 5.0 |
| Millisil® W12 | 42.9 | 42.9 | 42.9 | 49.5 | 49.5 | 49.5 | 49.5 |

(continued)

| Component B | | | | | | | |
|---|---|---|---|---|---|---|---|
| CAB-O-SIL® TS-720 | 4.3 | 4.3 | 4.3 | | | | |
| Aerosil R 805 | | | | 5.5 | 5.5 | 5.5 | 5.5 |
| $Ca(NO_3)_2$ (80% in glycerin) | | | | 2.5 | 2.5 | 2.5 | 2.5 |
| AHEQ [g/eq] | 74 | 74 | 74 | 103 | 103 | 103 | 103 |
| R1 [Mpa] | 35 | 36 | 35 | 31 | 33 | 33 | 32 |
| B7 [Mpa] | 28 | 31 | 31 | 29 | 29 | 30 | 30 |
| B8 [Mpa] | 22 | 21 | 22 | 22 | 23 | 22 | 25 |

Table 6: Composition of examples IE 26 and its comparative example CE 18 and bond strength at R1, B7 (DD) conditions

| | CE 18 | IE 26 |
|---|---|---|
| **Component A** | | |
| Araldite® GY 240 | 25.6 | 25.6 |
| Araldite® GY 282 | 13.8 | 13.8 |
| Araldite® DY-026 | 4.9 | 4.9 |
| Araldite® DY-T-CH | 4.9 | 4.9 |
| Millisil® W4 | 44.6 | 35.7 |
| Dynasylan® GLYMO | 3.4 | 3.3 |
| CAB-O-SIL® TS-720 | 2.7 | 2.7 |
| Cement | - | 9.5 |
| Cement type | - | Dyckerhoff weiß |
| EEQ [g/eq] | 307 | 310 |
| **Component B** | | |
| IPDA | 19.7 | 19.7 |
| BAC | 19.6 | 19.6 |
| Millisil® W4 | 49.4 | 49.4 |
| CAB-O-SIL® 720 | 5 | 5 |
| $Ca(NO_3)_2$ (80% in glycerin) | 6.3 | 6.3 |
| AHEQ [g/eq] | 99 | 99 |
| R1 [Mpa] | 34 | 37 |
| B7 [Mpa] | 30 | 33 |

Slightly improvements in the wet condition tests were also confirmed for the samples containing cement, however this effect was less pronounced than in the case of the CaO variants.

Curing experiments

CaO is a filler that can react with water but also due to its basicity could affect the curing of the mortar. Therefore, the curing speed of the samples (table 2 and table 3) was checked.

Table 7: Samples measured and time to $T_{max}$ obtained for them

| | Minutes to Temperature maximum |
|---|---|
| CE 8 | 46.3 |
| IE 4 | 25.75 |
| IE 5 | 20.82 |
| IE 6 | 17.07 |
| CE 9 | 19.15 |
| IE 7 | 19.87 |
| CE 10 | 29.3 |
| IE 8 | 27.7 |
| CE 11 | 35.10 |
| IE 9 | 33.16 |
| CE 12 | 15.03 |
| IE 10 | 12.40 |

From these experiments, a constant decrease of the time to $T_{max}$ in most of the samples was detected, suggesting a faster curing of the mortars due to the presence of CaO. Only for the very slow amines like IPDA (example IE 7 and comparative example CE 9), this decrease was not obvious.

**Used chemicals**

| Funtion | Name | Supplier |
|---|---|---|
| Epoxy resin | DGEBA - Araldite® GY 240 | Hunstman Advanced Materials, Germany |
| Epoxy resin | DGEBF - Araldite® GY 282 | Hunstman Advanced Materials, Germany |
| Reactive diluent | BDDGE - Araldite® DY-026 | Hunstman Advanced Materials, Germany |
| Reactive diluent | TMPTGE - Araldite® DY-T-CH | Hunstman Advanced Materials, Germany |
| Adhesion promoter | Glymo, (3-glycidyloxypropyl)trimethoxysilane | Evonik Resource Efficiency, Germany |
| Common filler | Millisil® W12, Quartz flour, average grain size $d_{50}$ = 16 $\mu$m | Quarzwerke, Germany |
| CaO | Calcium oxide | Sigma Aldrich, Germany |
| CaO | Nekafin 2 | Kalkfabrik Netstal AG, Switzerland |
| CaO | Nekafin 0 | Kalkfabrik Netstal AG, Switzerland |
| CaO | CaO soft burned | Rheinkalk GmbH, Germany |
| CaO | CaO middle burned | Rheinkalk GmbH, Germany |
| CaO | CaO hard burned | Rheinkalk GmbH, Germany |
| MgO | Magnesium Oxide | Sigma Aldrich, Germany |
| MgO | Magnesia 714 | Magnesia GmbH, Germany |
| MgO | Magnesia 7291 | Magnesia GmbH, Germany |
| $Ca(OH)_2$ | Nekablanc® 0 | Kalkfabrik Netstal AG, Switzerland |
| $Ca(OH)_2$ | Nekapur® 2 | Kalkfabrik Netstal AG, Switzerland |
| $Mg(OH)_2$ | Magnesia 2926 | Magnesia GmbH, Germany |

(continued)

| Funtion | Name | Supplier |
|---|---|---|
| $Mg(OH)_2$ | Magnesia 312 | Magnesia GmbH, Germany |
| Cement | Dyckerhoff weiß CEM I 42,5R | Dyckerhoff, Germany |
| Cement | HiPerCem | Calucem GmbH, Germany |
| Cement | SupraCem 45 | Schretter & Cie GmbH & Co. KG, Austria |
| Thickener | CAB-O-SIL® TS-720 | Cabot corporation, Germany |
| Thickener | Aerosil® R 805 | Evonik, USA |
| Amine | m-Xylylenediamine, mXDA | MGC, Japan |
| Amine | 2-methylpentane-1,5-diamine, Dytek A | Invista, Netherlands |
| Amine | Isophorondiamine, IPDA, vestamine IPD | Evonik Degussa, Germany |
| Amine | 1,3-Bis(aminomethyl)cyclohexan, BAC | Itochu, Germany |
| Accelerator | Calcium Nitrate Tetrahydrate | Sigma Aldrich, Germany |
| Solvent | 1,2,3-propanetriol, glycerine | Merck, Germany |
| Accelerator | Phenolite TD 2131 | DIC Europe. Germany |
| Hardener | Beckopox® SEH 2627 | Allnex, Belgien |
| Accelerator | Novares® LS 500 | Rütgers Novares GmbH, Germany |
| Accelerator | Ancamine® K54, (tris-2,4,6-dimethylaminomethyl phenol) (200 mPas@25°C) | Air products, Netherlands |

## Claims

**1.** A multi-component epoxy resin material, comprising:

an epoxy resin component (A) comprising at least one hardenable epoxy resin, and
a hardener component (B) comprising a hardening agent for the epoxy resin of component (A),
wherein the multi-component epoxy resin material further comprises CaO and at least one filler (F) selected from oxides of silicon and aluminium, or mixed oxides in the presence of further cations, wherein the combined amount of CaO and filler (F) in the multi-component epoxy resin material is 20 to 55 wt.-%, based on the total weight of the multi-component epoxy resin material, and
wherein the weight ratio of CaO to filler (F) in the multi-component epoxy resin material is at least 0.1.

**2.** The multi-component epoxy resin material according to claim 1, wherein the weight ratio of CaO to filler (F) in the multi-component epoxy resin material is at least 0.15, and *preferably* is 0.2 to 3.0.

**3.** The multi-component epoxy resin material according to claim 2, wherein the combined amount of CaO and filler (F) in the multi-component epoxy resin material is 25 to 55 wt.-%, and *preferably* is 35 to 55 wt.-%, based on the total weight of the multi-component epoxy resin material.

**4.** The multi-component epoxy resin material according to any one of claims 1 to 3, wherein the combined amount of CaO and filler (F) in the epoxy resin component (A) is 20 to 55 wt.-%, *preferably* is 25 to 55 wt.-%, and *more preferably* is 30 to 55 wt.-%, based on the total weight of epoxy resin component (A).

**5.** The multi-component epoxy resin material according to claim 4, wherein the weight ratio of CaO to filler (F) in the epoxy resin component (A) is at least 0.1, *preferably* is at least 0.2, and *more preferably* is at least 0.5.

**6.** The multi-component epoxy resin material according to claim 1, wherein the combined amount of CaO and filler (F) in the multi-component epoxy resin material is 40 to 50 wt.-%, based on the total weight of the multi-component epoxy resin material, the weight ratio of CaO to filler (F) in the multi-component epoxy resin material is 0.2 to 3.0, the combined amount of CaO and filler (F) in the epoxy resin component (A) is 40 to 50 wt.-%, based on the total weight of epoxy resin component (A), and the weight ratio of CaO to filler (F) in the epoxy resin component (A) is at least 0.2.

7. The multi-component epoxy resin material according to any one of claims 1 to 6 in the form of a two-component system consisting of components (A) and (B).

8. Use of the multi-component epoxy resin material according to any one of claims 1 to 7 for fixing anchoring elements in a hole or crevice in a building substrate.

9. A method of fixing an anchoring element in a hole or crevice in a building substrate, comprising introducing the multi-component epoxy resin material according to any one of claims 1 to 7 and an anchoring element into the hole or crevice, and allowing the multi-component epoxy resin material to cure.

Europäisches Patentamt
European Patent Office
Office européen des brevets

# EUROPEAN SEARCH REPORT

Application Number
EP 21 19 6890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/284454 A1 (EAGLE GLENN G [US]) 19 September 2019 (2019-09-19) * paragraphs [0001], [0021]; examples D,6-11, F; tables 1,3,5 * ----- | 1,2,4,5,7 | INV. C04B14/00 C04B26/14 C04B40/00 C04B40/06 C09J163/00 |
| X | EP 1 885 764 A1 (DOW GLOBAL TECHNOLOGIES INC [US]) 13 February 2008 (2008-02-13) * paragraphs [0018], [0045] - [0046]; table 4 * ----- | 1,2,5,7 | |
| X | US 2006/182974 A1 (GARNAULT ANNE-MARIE [FR] ET AL) 17 August 2006 (2006-08-17) * paragraph [0059] * ----- | 1,3-5,7 | |
| X | US 5 548 026 A (JORISSEN STEVEN A [US] ET AL) 20 August 1996 (1996-08-20) * example 4D * ----- | 1-9 | |

TECHNICAL FIELDS SEARCHED (IPC)
C04B
C09J

1 The present search report has been drawn up for all claims

| Place of search | Date of completion of the search | Examiner |
|---|---|---|
| The Hague | 13 January 2022 | Bezard, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 19 6890

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2022

| Patent document cited in search report | Publication date | Patent family member(s) | Publication date |
|---|---|---|---|
| US 2019284454 A1 | 19-09-2019 | BR 112019008052 A2 | 02-07-2019 |
| | | CN 110050052 A | 23-07-2019 |
| | | EP 3529328 A1 | 28-08-2019 |
| | | JP 2020500234 A | 09-01-2020 |
| | | US 2019284454 A1 | 19-09-2019 |
| | | WO 2018080747 A1 | 03-05-2018 |
| EP 1885764 A1 | 13-02-2008 | AT 431837 T | 15-06-2009 |
| | | BR PI0607978 A2 | 27-10-2009 |
| | | CA 2599400 A1 | 08-09-2006 |
| | | CN 101128503 A | 20-02-2008 |
| | | EP 1695990 A1 | 30-08-2006 |
| | | EP 1885764 A1 | 13-02-2008 |
| | | ES 2323894 T3 | 27-07-2009 |
| | | JP 4991575 B2 | 01-08-2012 |
| | | JP 2008531817 A | 14-08-2008 |
| | | KR 20070106534 A | 01-11-2007 |
| | | US 2006205897 A1 | 14-09-2006 |
| | | US 2009065143 A1 | 12-03-2009 |
| | | US 2011020652 A1 | 27-01-2011 |
| | | WO 2006093949 A1 | 08-09-2006 |
| US 2006182974 A1 | 17-08-2006 | AT 318875 T | 15-03-2006 |
| | | AU 2798302 A | 24-06-2002 |
| | | DE 10062009 A1 | 04-07-2002 |
| | | EP 1346002 A1 | 24-09-2003 |
| | | ES 2257458 T3 | 01-08-2006 |
| | | US 2004058181 A1 | 25-03-2004 |
| | | US 2006182974 A1 | 17-08-2006 |
| | | WO 0248277 A1 | 20-06-2002 |
| US 5548026 A | 20-08-1996 | CA 2173219 A1 | 11-05-1995 |
| | | DE 69415046 T2 | 19-08-1999 |
| | | EP 0739395 A1 | 30-10-1996 |
| | | MX 192948 B | 10-08-1999 |
| | | US 5548026 A | 20-08-1996 |
| | | WO 9512646 A1 | 11-05-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2248781 A
- EP 21188423

### Non-patent literature cited in the description


- **COOK, R. A. ; KONZ, R. C.** Factors Influencing Bond Strength of Adhesive Anchors. *ACI Structural Journal,* 2001, vol. 98, 76-86
- IUPAC Compendium of Chemical Terminology. **A. D. MCNAUGHT ; A. WILKINSON.** Gold Book. Blackwell Scientific Publications, 1997
- **MICHAEL DORNBUSCH ; ULRICH CHRIST ; ROB RASING.** Epoxy Resins. Vincentz Network GmbH & Co KG, 2015
- **LEE H ; NEVILLE K.** Handbook of Epoxy Resins. McGraw-Hill, 1982
- *CHEMICAL ABSTRACTS,* 61788-44-1
- **D. TUNGULIN ; B. BEHRENBERG ; J. LUTTER ; W. WALLMEIER.** *Quicklime with defined reaction time window for aerated autoclaved concrete production,* 2018, vol. 2, 223-229
- **B. MARBUN.** Kinetik der Hydratation von CaO und MgO. *PhD Thesis,* February 2006
- **RIKOTO I.I ; NUHU, S.** *Int. J. of Engineering Research and Reviews,* 2019, vol. 7 (1), 61-66
- **SHI, H. ; ZHAO, Y. ; LI, W.** *Cement and Concrete Research,* 2002, vol. 32, 789-793
- **MTARFI, M. H. ; RAIS, Z. ; TALEB, M.** *Journal of Materials and Environmental Sciences,* 2017, vol. 8 (7), 2541-2548